# EUROPEAN PATENT SPECIFICATION

(11) **EP 2 538 099 B1**
(45) Date of publication and mention of the grant of the patent: **24.12.2014**
(21) Application number: 11816068.8
(22) Date of filing: 29.07.2011
(51) Int. Cl.: F16C 33/62, F16C 33/64, B32B 15/01, B22D 13/02, F16C 33/14

(54) **PRODUCTION PROCESS OF A BEARING RING MATERIAL**
LAGERRINGMATERIALHERTELLUNGSVERFAHREN
PROCESSUS DE PRODUCTION D'UNE BAGUE DE ROULEMENT

(30) Priority: 13.08.2010 CN 201010252962
(43) Date of publication of application: 26.12.2012
(73) Proprietor: Xinxing Ductile Iron Pipes Co., Ltd, Wuan, Hebei 056300 (CN); Beijing Changxing Kaida Composite Material Development Co., Ltd., Beijing 100070 (CN); Tang, Yong, Sichuan 611130 (CN)
(72) Inventor: TANG, Yong, Sichuan 611130 (CN); WANG, Lihui, Wuan Hebei 056300 (CN); LI, Chibo, Wuan Hebei 056300 (CN); BAO, Shanqin, Wuan Hebei 056300 (CN); GAO, Jie, Wuan Hebei 056300 (CN); SONG, Yafeng, Wuan Hebei 056300 (CN); HUANG, Xiaobin, Wuan Hebei 056300 (CN)
(74) Representative: Gulde & Partner
(86) International application number: PCT/CN2011/077797
(87) International publication number: WO 2012/019509

(56) References cited:
- EP-A1- 1 783 386
- CN-A- 1 621 704
- CN-A- 1 686 713
- CN-A- 101 474 903
- CN-A- 101 699 086
- CN-A- 101 774 010
- CN-A- 101 915 273
- CN-Y- 2 630 522
- US-B1- 6 318 330

## Description

The present invention relates to a production process of a bimetallic composite pipe, especially to a production process of a composite pipe made of a material used for a bearing ring.

### Background of the Invention

Material currently used for bearing is mainly divided into several kinds as following:
1) High-carbon chromium bearing steel (GB/T 18254-2002)
   High-carbon chromium bearing steel generally includes GCr9, GCr15, GCr9SiMn, GCr15SiMn and the like. GCr9 is mainly used to produce a small steel ball or a roller on rotating shaft, a bearing ring and a rolling element used in ordinary conditions; GCr15 is used to produce a steel ball, a roller or a bearing ring of a large machinery; GCr9SiMn is of performance similar to that of GCr15 and mainly used to produce a larger bearing ring; GCr15SiMn has better wear resistance and hardenability compared to GCr15 and is mainly used to produce a bearing ring, a steel ball and a roller of a large bearing.
2) Carburizing bearing steel (GB/T3203-1982)
   Carburizing bearing steel generally includes G20CrMo, G20Cr2Ni4, G20Cr2Mn2Mo, G20CrNi2Mo and the like. This kind of bearing steel is mainly used for bearing ring and rolling element withstood impact load, since this kind of steel could have better hardness and toughness after case carburized and could withstand larger impact load. Carburizing bearing steel such as G20Cr2Ni4 has HRC62 surface hardness, HRC43 central hardness, 23mm carburized depth and 68.7J/cm² impact toughness after carburized and heat treated.
3) Stainless bearing steel (GB/T3086-1982)
   Currently, 9Cr18 and 9Cr18MoV are stainless bearing steel broadly used. This kind of steel is mainly used to produce a corrosion resistant bearing ring and a corrosion resistant rolling element, such as a bearing used in seawater, river, nitric acid, petrochemical and atomic reactor, etc.
4) Oil-free lubricated bimetallic bearing material
   Oil-free lubricated bimetallic bearing material is made of plain carbon steel with lead tin bronze alloy sintered thereon. The bearing material is made from copper-steel bimetallic strip which is high temperature sintered and densely rolled. The bearing material is adapted to produce a bushing, a thrust washer and the like which could understand middle-speed and high-speed impact load.

A rolling bearing is usually operated at higher speed or larger load, thus the rolling bearing material is required to have the following characters:
1) The material must be quenched sufficiently to get higher hardness and better wear resistance;
2) The material must have higher fatigue strength, especially shear fatigue strength of work surface;
3) It must be ensured that the bearing parts have stability in structure and dimension at working temperature;
4) The bearing withstood impact load must have higher impact resistance;

However, since hardness and wear resistance conflict with toughness and impact resistance for the same material, the requirements of sufficiently high hardness, strength and wear resistance inevitably are at the cost of reduced toughness and impact resistance of the material. Although carburizing bearing steel could meet the interaction between the work surface hardness and the overall toughness, the unevenness of carbon content of the carburized layer would significantly reduce the shear strength of the work surface. United States patent US318330B1 disclosed a cylinder liner for an internal combustion engine, in which was disclosed a novel material used for a cylindrical bearing composed of a clad layer (26) and a base layer (22). The clad layer and the base layer are metallurgical bonded together in radial direction. The clad layer is made of bearing steel material and the base layer is made of the material selected from bearing steel or plain carbon steel.

### Summary of the Invention

The technical problem to be solved in this invention is to provide a production process of a novel material used for a bearing ring, in which high hardness, high wear resistance and high toughness, high impact toughness of the material are interacted.

The novel material used for a bearing ring according to the invention is composed of an annular clad layer and a base layer. The clad layer and the base layer is metallurgical bonded together in radial direction of them. The clad layer is made of bearing steel material, and the base layer is made of the material selected from bearing steel, plain carbon steel, low/medium carbon steel, or stainless steel.

The novel material used for the bearing ring according to the invention is provided, wherein the clad layer is used as a working layer and the base layer is used as a supporting layer.

The novel material used for the bearing ring according to the invention is provided, wherein the clad layer is provided on the outside of the base layer in radial direction of the base layer.

The novel material used for the bearing ring according to the invention is provided, wherein the clad layer is provided on the inside of the base layer in radial direction of the base layer.

The novel material used for the bearing ring according to the invention is provided, wherein the clad layer is made of high-carbon chromium bearing steel material or stainless bearing steel material.

A process of a novel material used for a bearing ring according to the invention is carried out as follows:

### (1) Selecting material, in which:

Selecting the clad layer material, i.e. bearing steel material, according to the use condition. Selecting the corresponding base layer material according to the strength requirements and the coefficient of thermal expansion of the clad layer, i.e. bearing steel material, plain carbon steel, low/medium carbon steel, or stainless steel. The toughness of the base layer material is higher than that of the clad layer.

### (2) Centrifugal casting, in which:

A. roasting a metal pipe mold to 200-300°C and spraying, getting 1.0-3.0mm spraying thickness;
B. roasting the sprayed metal pipe mold to 200-350°C;
C. Centrifugal casting a first layer liquid metal, clad layer liquid metal or base layer liquid metal, into the metal pipe mold of the step B and cooling;
D. numerical simulating and analyzing the heat transfer of the first metal layer which is casted and solidified, and casting a second layer liquid metal, base layer liquid metal or clad layer liquid metal, depending on the temperature analysis;
E. cooling the casted composite pipe billet to below 700 °C then demolding;
F. heat-treating the pipe billet of the step E depending on subsequent processing conditions;

### (3) Longitudinal rolling, in which:

G. machining the as-cast composite pipe billet of the step F and getting the size required as longitudinal rolling;
H. longitudinal rolling the composite pipe of the step G, consequently forming the composite pipe ring used for the bearing ring.

The production process of the novel material used for a bearing ring according to the invention is provided, wherein the said step (3) is replaced with hot extrusion, that is to say,
G. machining the as-cast composite pipe billet of the step F and getting the size required as hot extrusion;
H. hot extrusion the composite pipe of the step G, consequently forming the composite pipe ring used for the bearing ring.

The production process of the novel material used for a bearing ring according to the invention is provided, wherein the said step (3) is replaced with hot milling, that is to say,
G. machining the as-cast composite pipe billet of step F and getting the size required as hot milling;
H. hot milling the composite pipe of the step G, consequently forming the composite pipe ring used for the bearing ring.

The production process of the novel material used for a bearing ring according to the invention is provided, wherein the said step (3) is replaced with forging, that is to say,
G. machining the as-cast composite pipe billet of step F and getting the size required as forging;
H. forging the composite pipe of the step G, consequently forming the composite pipe ring used for the bearing ring.

The production process of the novel material used for a bearing ring according to the invention is provided, wherein the heat treatment in the said step F includes normalizing, spheroidizing annealing or diffusion annealing.

A bimetallic composite pipe is made of the novel material used for a bearing ring according to the invention. The pipe is composed of a clad layer which is made of bearing steel material and a base layer which is made of the material, for example, bearing steel, plain carbon steel, low/medium carbon steel, or stainless steel with higher toughness/impact toughness and coefficient of thermal expansion similar to that of the clad layer. Because of this, the required toughness and high impact toughness of the bearing material are dramatically improved when the performance requirement of a normal bearing steel material is ensured, so as to prevent the bearing from impacting under large impact load and simultaneously to overcome the low shear fatigue resistance of the working face of carburizing bearing steel due to the unevenness of the carburized layer.

The novel material used for a bearing ring according to the invention and the production process thereof is further described as follows in conjunction with the accompanying figures.

### Brief Description of the Drawings

Fig.1 is a structural schematic view of the first embodiment of the novel material used for a bearing ring according to the invention;
Fig.2 is a structural schematic view of the second embodiment of the novel material used for a bearing ring according to the invention.

### Detailed Description of the Invention

### Example 1

### (1) Selecting material, in which:

The material is made of two layers: an outer layer (a base layer) is low carbon steel which is 16MnV, and an inner layer (a clad layer) is bearing steel which is GCr15.

The composition of 16MnV (by mass) is as follows: C 0.14-0.2%, Si 0.3-0.6%, Mn 1.0-1.6%, P≤0.025%, S≤0.025%, V 0.05-0.15%, and the balance being Fe. The melting point of the material is about 1510°C, i.e.1783.15K.

The composition of GCr15 (by mass) is as follows: C 0.95-1.05%, Si 0.15-0.35%, Mn 0.25-0.45%, P≤0.025%, S≤0.025%, Cr 1.4-1.65%, and the balance being Fe. The melting point of the material is about1450°C, i.e.1723.15K.

### (2) Centrifugal casting, in which:

A. roasting a metal pipe mold to 250-260 °C and spraying, and getting 2.0-2.1mm spraying thickness;
B. roasting the sprayed metal pipe mold to 260-290°C;
C. Centrifugal casting 16MnV liquid metal at 1587°C and 360Kg into the metal pipe mold of the step B and cooling;
D. numerical simulating and analyzing the heat transfer of the casted and solidified outer layer metal 16MnV, then casting an inner layer GCr15 liquid metal at 1504 °C and 90Kg when the inner surface temperature of the outer layer has reduced to 1400°C in order to get a better integrated thickness between the inner and the outer layers;
E. cooling the casted composite pipe to room temperature, at this time the inner layer and the outer layer is sufficiently metallurgical bonded and the metallurgical bonding thickness is 1.0-1.5 mm;

### (3) hot extrusion, in which:

F. machining the as-cast composite pipe of the step E and getting the size which is Ø248/Ø142/0108×573mm required as extrusion press;
G. hot extrusion the composite pipe of the step F, at 1195°C and 22-25MPa, and getting 12.0 extrusion ratio and Ø90/Ø64/Ø58×5600mm finished pipe.

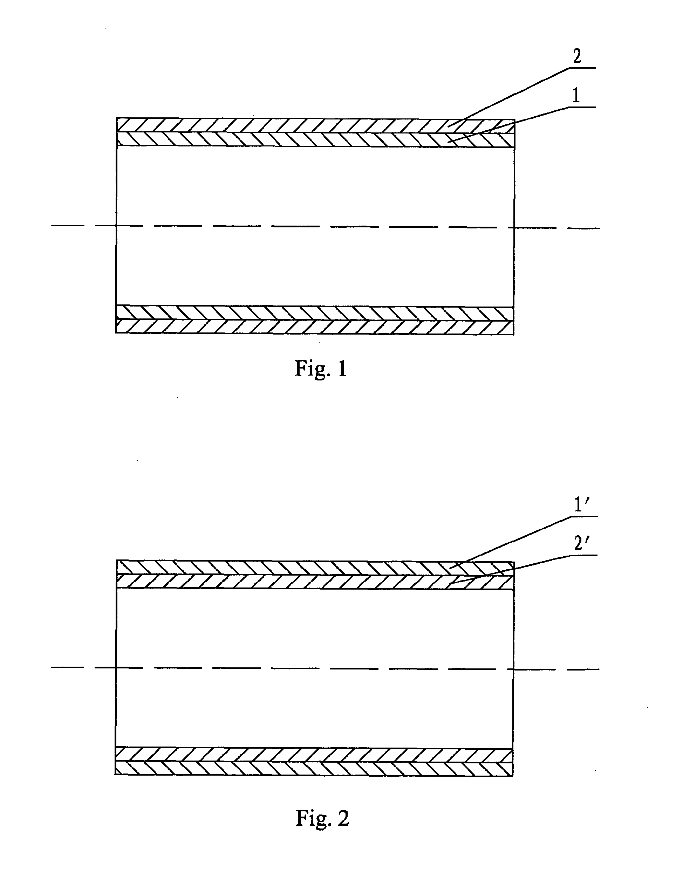

The structural schematic view of the novel material used for a bearing ring from the step G is shown in Fig.1, in which the inner clad layer 1 is used as the working surface and the outer base layer 2 is used as the supporting layer.

### Example 2

### (1) Selecting material, in which:

The material is made of two layers: an outer layer (a clad layer) is bearing steel which is GCr15, and an inner layer (a base layer) is medium carbon steel which is 30CrMnSi.

The composition of 30CrMnSi (by mass) is as follows: C 0.27-0.34%, Si 0.9-1.2%, Mn 0.8-1.1%, Cr 0.8-1.1%, P≤0.035%, S≤0.035%, and the balance being Fe. The melting point of the material is about 1480-1500°C, i.e.1753.15-1773.15K.

The composition of GCr15 (by mass) is as follows: C 0.95-1.05%, Si 0.15-0.35%, Mn 0.25-0.45%, P≤0.025%, S≤0.025%, Cr 1.4-1.65%, and the balance being Fe. The melting point of the material is about 1450°C, i.e.1723.15K.

### (2) Centrifugal casting, in which:

A. roasting a metal pipe mold to 250-260°C and spraying, and getting 2.0-2.1mm spraying thickness;
B. roasting the sprayed metal pipe mold to 270-300°C;
C. Centrifugal casting GCr15 liquid metal at 1556°C and 270Kg into the metal pipe mold of the step B and cooling;
D. numerical simulating and analyzing the heat transfer of the casted and solidified outer layer metal GCr15, then casting an inner layer 30CrMnSi liquid metal at 1587°C and 90Kg when the inner surface temperature of the outer layer has reduced to 1387°C in order to get a better integrated thickness between the inner and the outer layers;
E. cooling the casted composite pipe to room temperature, at this time the inner layer and the outer layer is sufficiently metallurgical bonded and the metallurgical bonding thickness is 1.0-1.5 mm

### (3) hot extrusion, in which:

F. machining the as-cast composite pipe of the step E and getting the size which is Ø280/Ø260/Ø130×780mm required as extrusion press;
G. hot extrusion the composite pipe of the step F at 1200°Cand 22 - 25MPa, and getting 11.3 extrusion ratio and Ø139.7/Ø136/0118.6×7000mm finished pipe.

The structural schematic view of the novel material used for a bearing ring from the step G is shown in Fig.2, in which the outer clad layer 1' is used as the working layer and the inner base layer 2' is used as the supporting layer

### Example 3

### (1) Selecting materials, in which:

The material is made of two layers: an outer layer (a base layer) is low carbon steel which is 16MnV, and an inner layer (a clad layer) is bearing steel which is GCr15.

The composition of 16MnV (by mass) is as follows: C 0.14-0.2%, Si 0.3-0.6%, Mn 1.0-1.6%, P≤0.025%, S≤0.025%, V 0.05-0.15%, and the balance being Fe. The melting point of the material is about 1510°C, i.e.1783.15K.

The composition of GCr15 (by mass) is as follows: C 0.95-1.05%, Si 0.15-0.35%, Mn 0.25-∼0.45%, P≤0.025%, S≤0.025%, Cr 1.4-1.65%, and the balance being Fe. The melting point of the material is about1450°C, i.e.1723.15K.

### (2) Centrifugal casting, in which:

A. roasting a metal pipe mold to 250-260°C and spraying, and getting 2.0-2.2mm spraying thickness;
B. roasting the sprayed metal pipe mold to 270-300°C;
C. centrifugal casting 16MnV liquid metal at 1576°C and 372Kg into the metal pipe mold of the step B and cooling;
D. numerical simulating and analyzing the heat transfer of the casted and solidified outer layer metal 16MnV, then casting an inner layer metal GCr15 at 1555°C and 135Kg t when the inner surface temperature of the outer layer has reduced to 1395°C in order to get a better integrated thickness between the inner and the outer layers;
E. cooling the casted composite pipe to room temperature, at this time the inner layer and the outer layer is sufficiently metallurgical bonded and the metallurgical bonding thickness is 1.0-1.5 mm;

### (3) Continuous rolling, in which:

F. machining the as-cast composite pipe of the step E and getting the size which is Ø220/Ø140/Ø110×2000mm required as continuous rolling;
G. continuous rolling the composite pipe of the step F at 1210°C and getting Ø219/Ø198.6/Ø193×6000mm finished pipe.

### Example 4

### (1) Selecting material, in which:

The material is made of two layers: an outer layer (a base layer) is carburizing bearing steel which is G20CrNi2Mo, and an inner layer (a clad layer) is bearing steel which is GCr15.

The composition of G20CrNi2Mo (by mass) is as follows: C 0.17-0.23%, Si 0.15-0.40%, Mn 0.40-0.70%, P≤0.02%, S≤0.02%, Cr 0.4-0.6%, Ni 1.6-2.0%, Mo 0.2-0.3%, Al 0.1-0.5%, Cu≤0.2%, and the balance being Fe. The melting point of the material is about 1490°C.

The composition of GCr15 (by mass) is as follows: C 0.95-1.05%, Si 0.15-0.35%, Mn 0.25-0.45%, P≤-0.025%, S≤0.025%, Cr 1.4-1.65%, and the balance being Fe. The melting point of the material is about 450°C.

### (2) Centrifugal casting, in which:

A. roasting a metal pipe mold to 250-260°C and spraying, and getting 2.0-2.2mm spraying thickness;
B. roasting the sprayed metal pipe mold to 270-300°C;
C. centrifugal casting G20CrNi2Mo liquid metal at 1589°C and 204Kg into the metal pipe mold of the step B and cooling;
D. numerical simulating and analyzing the heat transfer of the casted and solidified outer layer metal G20CrNi2Mo, then casting an inner layer metal GCr15 at 1570°C and 105Kg when the inner surface temperature of the outer layer has reduced to 1362°C in order to get a better integrated thickness between the inner and the outer layers;
E. cooling the casted composite pipe to room temperature and demolding, at this time the inner layer and the outer layer is sufficiently metallurgical bonded and the metallurgical bonding thickness is 0.8∼1.2mm; normalizing the finished billet at 930°C;

### (3) Milling, in which:

F. machining the as-cast composite pipe of the step E and getting the size which is Ø219/Ø162/Ø135×75mm required as milling;
G. Milling the composite pipe of the step F at 1180°C and getting Ø275/Ø230/Ø211 ×71mm finished ring.

After the samples of the pipe achieved from the step G of example 1, 2, 3 and 4 are heat treated according to the heat treatment process of conventional bearing steel, the base layer and the clad layer have the performance stated in table 1.

**Table 1 the performance of the novel bearing material**

| novel bearing material | Heat | Base layer | | | Clad layer | | Overall performance | |
|---|---|---|---|---|---|---|---|---|
| | treatment process | tensile strength (MPa) | yield strength (MPa) | Elongation (%) | Hardness (HRC) | bulk worn loss (mm³) | Impact (J) | shear strength of the composite layer (MPa) |
| | | GB 228-87 | | | GB/T 230-1991 | GB/T 12444-2006 | GB/T 229-2007 | ASTM 264-03 |
| 16MnV/GCr15 (Example 1) | 900°C×1h, quenching oil+ 170°C×3h, cooling by air | 848.06 | 501.80 | 25.12 | 63.94 | 1.81 | 49.7 | 504 |
| GCr15/30CrMnSi (Example 2) | 900° C×1h, quenching oil+ 170° C×3h, cooling by air | 1080 | 885 | 10 | 64.5 | 1.67 | 34 | 532 |
| 16MnV/GCr15 (Example 3) | 900° C×1h, quenching oil+ 170° C×3h, cooling by air | 785.4 | 468.7 | 26.4 | 62.76 | 1.86 | 51 | 485 |
| G20CrNi2Mo/GCr 15 (Example 4) | 900° C×1h, quenching oil+ 170° Cx3h, cooling by air | 935 | 748 | 12 | 63.5 | 1.77 | 36 | 502 |

In table 1, GB, GB/T and ASTM are standard test methods for assessing the performances of the bearing material.

By heat treating the novel material used for a bearing ring from the step G of above described 4 examples and a conventional production process of a bearing ring, a bearing ring is formed.

### Practical applicability

The novel material used for the bearing ring and the production process thereof utilizes the existing metal material and the existing equipment to produce the material used for the bearing ring with excellent performance by special production process. The material used for the bearing ring may improve the performance and life of the bearing, thus having widen market prospect and strong practical applicability.

## Claims

1. A production process of a novel material used for a bearing ring, in which the material being composed of a clad layer and a base layer, the clad layer and the base layer being metallurgical bonded together in radial direction of them, the clad layer being made of bearing steel material and the base layer being made of the material selected from bearing steel or plain carbon steel, wherein the process is carried out as follows:
(1) Selecting material, in which:
Selecting the clad layer material, i.e. bearing steel material, according to the use condition.
Selecting the corresponding base layer material according to the strength requirements and the coefficient of thermal expansion of the clad layer, i.e. bearing steel material, plain carbon steel low/medium carbon steel, or stainless steel, and the toughness of the base layer material is higher than that of the clad layer.
(2) Centrifugal casting, in which:
A. roasting a metal pipe mold to 200-300°C and spraying, getting 1.0-3.0mm spraying thickness;
B. roasting the sprayed metal pipe mold to 200-350°C;
C. centrifugal casting a first liquid metal, a clad layer liquid metal or a base layer liquid metal, into the said metal pipe mold of the step B and cooling;
D. numerical simulating and analyzing the heat transfer of the first metal layer which is casted and solidified, and casting a second liquid metal, the base layer liquid metal or the clad layer liquid metal, depending on the temperature analysis;
E. cooling the casted composite pipe billet to below 700 °C then demolding;
F. heat-treating the said pipe billet of the step E depending on subsequent processing conditions;
(3) Longitudinal rolling, in which:
G. machining the as-cast composite pipe billet of the step F and getting the size required as longitudinal rolling;
H. longitudinal rolling the composite pipe of the step G, consequently forming the composite pipe ring used for the bearing ring.

2. The production process of the novel material used for a bearing ring of claim 1, wherein the step (3) is replaced with hot extrusion, that is to say,
G. machining the as-cast composite pipe billet of the step F and getting the size required as hot extrusion;
H. hot extrusion the composite pipe of the step G, consequently forming the composite pipe ring used for the bearing ring.

3. The production process of the novel material used for a bearing ring of claim 1, wherein the step (3) is replaced with hot milling, that is to say,
G. machining the as-cast composite pipe billet of the step F and getting the size required as hot milling;
H. Hot milling the composite pipe of the step G, consequently forming the composite pipe ring used for the bearing ring.

4. The production process of the novel material used for a bearing ring of claim 1, wherein the step (3) is replaced with forging, that is to say,
G. machining the as-cast composite pipe billet of the step F and getting the size required as forging;
H. forging the composite pipe of the step G, consequently forming the composite pipe ring used for the bearing ring.

5. The production process of the novel material used for a bearing ring of any one of claims 1-4, wherein the heat treatment in the step F includes normalizing, spheroidizing annealing or diffusion annealing.

## Patentansprüche

1. Herstellungsverfahren eines für einen Lagerring verwendeten neuartigen Materials, bei dem das Material aus einer Plattierungsschicht und einer Grundschicht zusammengesetzt ist, wobei die Plattierungsschicht und die Grundschicht in ihrer radialen Richtung metallurgisch miteinander verbunden sind, wobei die Plattierungsschicht aus Lagerstahlmaterial gefertigt ist und die Grundschicht aus einem aus Lagerstahl oder unlegiertem Kohlenstoffstahl ausgewählten Material gefertigt ist, wobei das Verfahren wie folgt durchgeführt wird:
(1) Auswählen von Material, bei dem:
Auswählen des Plattierungsschichtmaterials, d. h. des Lagerstahlmaterials, entsprechend der Einsatzbedingung. Auswählen des entsprechenden Grundschichtmaterials entsprechend den Festigkeitsanforderungen und dem Wärmeausdehnungskoeffizienten der Plattierungsschicht, d. h. des Lagerstahlmaterials, unlegierten Kohlenstoffstahls, Stahls mit niedrigem/mittleren Kohlenstoffgehalt oder nichtrostenden Stahls, und die Festigkeit des Grundschichtmaterials ist höher als die der Plattierungsschicht.
(2) Schleudergießen, bei dem:
A. Erhitzen einer Metallrohrform auf 200-300°C und Besprühen, wobei eine Sprühdicke von 1,0-3,0 mm erhalten wird;
B. der besprühten Metallrohrform auf 200-350°C;
C. Schleudergießen eines ersten flüssigen Metalls, eines flüssigen Plattierungsschichtmetalls oder eines flüssigen Grundschichtmetalls, in die Metallrohrform von Schritt B und Abkühlen;
D. numerisches Simulieren und Analysieren der Wärmeübertragung der gegossenen und erstarrten ersten Metallschicht und Gießen eines zweiten flüssigen Metalls, des flüssigen Grundschichtmetalls oder des flüssigen Plattierungsschichtmetalls, in Abhängigkeit von der Temperaturanalyse;
E. Abkühlen des Verbundrohrgussstücks auf unter 700°C, dann Entformen;
F. Wärmebehandeln des Rohrgussstücks von Schritt E in Abhängigkeit von den nachfolgenden Verarbeitungsbedingungen;
(3) Längswalzen, bei dem:
G. maschinelles Bearbeiten des Verbundrohrgussstücks von Schritt F und Erhalten der für das Längswalzen erforderlichen Größe;
H. Längswalzen des Verbundrohrs von Schritt G und dadurch Ausbilden des für den Lagerring verwendeten Verbundrohrrings.

2. Herstellungsverfahren des für einen Lagerring verwendeten neuartigen Materials nach Anspruch 1, wobei der Schritt (3) durch Heißextrusion ersetzt ist, das heißt:
G. maschinelles Bearbeiten des Verbundrohrgussstücks von Schritt F und Erhalten der für die Heißextrusion erforderlichen Größe;
H. Heißextrusion des Verbundrohrs von Schritt G und dadurch Ausbilden des für den Lagerring verwendeten Verbundrohrrings.

3. Herstellungsverfahren des für einen Lagerring verwendeten neuartigen Materials nach Anspruch 1, wobei der Schritt (3) durch Heißfräsen ersetzt ist, das heißt:
G. maschinelles Bearbeiten des Verbundrohrgussstücks von Schritt F und Erhalten der für das Heißfräsen erforderlichen Größe;
H. Heißfräsen des Verbundrohrs von Schritt G und dadurch Ausbilden des für den Lagerring verwendeten Verbundrohrrings.

4. Herstellungsverfahren des für einen Lagerring verwendeten neuartigen Materials nach Anspruch 1, wobei der Schritt (3) durch Schmieden ersetzt ist, das heißt:
G. maschinelles Bearbeiten des Verbundrohrgussstücks von Schritt F und Erhalten der für das Schmieden erforderlichen Größe;
H. Schmieden des Verbundrohrs von Schritt G und dadurch Ausbilden des für den Lagerring verwendeten Verbundrohrrings.

5. Herstellungsverfahren des für einen Lagerring verwendeten neuartigen Materials nach einem der Ansprüche 1-4, wobei die Wärmebehandlung in Schritt F Normalglühen, Weichglühen oder Diffusionsglühen umfasst.

## Revendications

1. Processus de production d'un nouveau matériau utilisé pour une bague de roulement, dans lequel le matériau est composé d'une couche de plaquage et d'une couche de base, la couche de plaquage et la couche de base étant liées l'une à l'autre au plan métallurgique dans leur direction radiale, la couche de plaquage étant réalisée en matériau d'acier pour roulements et la couche de base étant réalisée dans un matériau sélectionné parmi l'acier pour roulements ou l'acier ordinaire au carbone, le processus étant réalisé comme suit :
(1) Sélection du matériau, comprenant:
Sélection du matériau de couche de plaquage, c'est-à-dire du matériau d'acier pour roulements, en fonction des conditions d'utilisation.
Sélection du matériau de couche de base correspondant selon les exigences de résistance et le coefficient de dilatation thermique de la couche de plaquage, c'est-à-dire du matériau d'acier pour roulements, de l'acier au carbone non allié, de l'acier à teneur faible / moyenne en carbone, ou de l'acier inoxydable, la ténacité du matériau de couche de base étant supérieure à celle de la couche de plaquage.
(2) Moulage par centrifugation, comprenant :
A. chauffage d'un moule de tube métallique à 200-300° C et pulvérisation, en obtenant une épaisseur de pulvérisation de 1,0-3,0 mm ;
B. chauffage du moule de tube métallique pulvérisé à 200-350° C ;
C. moulage par centrifugation d'un premier métal liquide, d'un métal liquide de couche de plaquage ou d'un métal liquide de couche de base dans ledit moule de tube métallique de l'étape B et refroidissement ;
D. simulation numérique et analyse du transfert thermique de la première couche métallique qui est moulée et solidifiée, et moulage d'un deuxième métal liquide, du métal liquide de la couche de base ou du métal liquide de la couche de plaquage, en fonction de l'analyse de température ;
E. refroidissement de la billette de tube composite moulée à moins de 700°C, puis démoulage ;
F. traitement thermique de ladite billette de tube de l'étape E en fonction des conditions de traitement qui viennent ensuite ;
(3) Laminage longitudinal, comprenant :
G. usinage de la billettes de tube composite brute de coulée de l'étape F et obtention de la dimension requise pour le laminage longitudinal ;
H. laminage longitudinal du tube composite de l'étape G, puis formation de la bague de tube composite utilisée pour la bague de roulement.

2. Processus de production du nouveau matériau utilisé pour une bague de roulement selon la revendication 1, dans lequel l'étape (3) est remplacée par une extrusion à chaud, à savoir
G. usinage de la billette de tube composite brute de coulée de l'étape F et obtention de la dimension requise pour l'extrusion à chaud ;
H. extrusion à chaud du tube composite de l'étape G, puis formation de la bague de tube composite utilisée pour la bague de roulement.

3. Processus de production du nouveau matériau utilisé pour une bague de roulement selon la revendication 1, dans lequel l'étape (3) est remplacée par un fraisage à chaud, à savoir
G. usinage de la billette de tube composite brute de coulée de l'étape F et obtention de la dimension requise pour le fraisage à chaud ;
H. fraisage à chaud du tube composite de l'étape G, puis formage de la bague de tube composite utilisée pour la bague de roulement.

4. Processus de production du nouveau matériau utilisé pour une bague de roulement selon la revendication 1, dans lequel l'étape (3) est remplacée par le forgeage, à savoir G. usinage de la billette de tube composite brute de coulée de l'étape F et obtention de la dimension requise pour le forgeage ;
H. forgeage du tube composite de l'étape G, puis formage de la bague de tube composite utilisée pour la bague de roulement.

5. Processus de production du nouveau matériau utilisé pour une bague de roulement selon l'une quelconque des revendications 1-4, dans lequel le traitement thermique de l'étape F inclut la normalisation, le recuit de sphéroïdisation ou le recuit de diffusion.
